Europäisches Patentamt

European Patent Office

Office européen des brevets

Publication number: **0 283 607**
**A1**

# EUROPEAN PATENT APPLICATION

Application number: 87302556.3

Int. Cl.⁴: **A23N 7/00**

Date of filing: 24.03.87

Date of publication of application:
28.09.88 Bulletin 88/39

Designated Contracting States:
AT BE CH DE ES FR GB GR IT LI NL SE

Applicant: **Auburn Research Foundation**
**202 Samford Hall**
**Auburn University Alabama 36849(US)**

Inventor: **Harris, Hubert**
**259 Opelika Road**
**Auburn Alabama 36830(US)**
Inventor: **Smith, Durward A.**
**1623 Wrights Mill Road**
**Auburn Alabama 36830(US)**

Representative: **Allen, William Guy Fairfax et al**
**J.A. KEMP & CO. 14 South Square Gray's Inn**
**London WC1R 5EU(GB)**

## Method of peeling thin skinned food products.

A method of peeling thin skinned food products with minimal loss of or damage to edible portions thereof, said method comprising the steps of feeding said food product continuously into and out of a vessel, subjecting said food products as they pass through said vessel, to radiant heat at a temperature in the range of 340°C to 705°C and to contact heat from the fluid in the vessel at a temperature in the range of 340°C to 705°C, maintaining the pressure in said vessel at a level not greater than two bars gauge and arranging for the food product to spend between 8 and 75 seconds in said vessel and immediately thereafter subjecting said food products to ambient temperature and pressure.

Fig.1.

EP 0 283 607 A1

0 283 607

## METHOD OF PEELING THIN SKINNED FOOD PRODUCTS

The present invention relates to a method of peeling thin skinned food products.

Most of man's foods in the natural state are protected with a covering such as the peel tissues of fruits and vegetables, hulls of legume seed pods, shuck covering of corn ears, skins of onions, shells of nuts, scales of fish, and the calcareous coverings of shellfish. In most cases, these coverings are considered to be inedible and are therefore removed when preparing the product for human consumption. Current methods used in the food industry include mechanical peeling with power operated knives, abrasive peeling, flame peeling, scalding, steam peeling, mechanical shelling of legume crop, mechanical cracking of nuts, mechanical shelling of shrimp. Adequate washing and varying amounts of scrubbing, sorting, and hand trimming are required to complete the operations.

There are two common commercial types of steam peeling methods. In the first of these methods, vegetables are charged through a rotary-type sluice gate batcher into a hermetically sealed chamber and are processed under a pressure of 3.4-6.1 bar for 40-90 seconds. While being processed by steam, the vegetables are displaced along the chamber by a screw conveyor, from the point of charging to the point of discharge. The vegetables are then discharged through a sluice gate batcher into a washing and peeling machine in which they are mechanically peeled (FMC Continuous High Pressure Steamers Models 140 and 240 FMC Catalog (1980) pp. 49-50). The second peeling method utilises a high pressure batch-type steam vessel which is filled from above, purged with steam for several seconds and hermetically sealed prior to a gradual pressure build up. Pressures up to 20.4 bar for 20-60 seconds are used. The exhaust valve is then opened requiring several seconds for the pressure to gradually fall, and before the discharge hatch can be opened. The produce is then discharged on a conveyor and is conveyed to a washer where the peeling is mechanically completed (US Patent 4091722). A further steam peeling method has been described, but is not utilised by the industry, whereby the produce to be peeled is conveyed by gravity through a system of chambers separated by hydraulically actuated gate valves. In the process the produce moves from an atmospheric chamber to a low pressure steam environment to a vacuum chamber (US Patent 3759166).

The prior methods and apparatus for processing vegetables by steam are disadvantageous because following processing and due to slow venting of the pressure vessel the surface layers of the produce are excessively heated. The heat continues penetrating inside, thereby increasing the depth of the layer being treated, which results in large amounts of by-product and correspondingly higher peeling and trimming losses. These methods are most applicable for processing vegetables of a hard consistency (potatoes for example). Fruits and vegetables of delicate consistency are not well peeled in such methods because they quickly begin to cook and become soft and/or are sensitive to high pressures which disrupt their structural integrity. A further "thermal blast" process is shown in US Patent 4524681 and US Patent 4569850, in which the product is held for a brief period in a heated, closed vessel filled with superheated steam under elevated pressure, and then instantaneously releasing pressure. During the holding period, thermal energy is transferred at a very fast rate to the moisture just beneath the outer covering of the product, by the simultaneous exposure of the product surface to two sources of heat: namely direct contact with pressurised, superheated steam and radiant heat from the hot vessel walls. Becoming highly energised, the moisture immediately beneath the surface flashes to the vapour state when the pressure surrounding the product is suddenly released. The rapidly expanding vapour utilises the thermodynamic properties of water to cause an explosive process which blasts the outer peel, pod, shuck, skin, scale, or shell from the product under treatment. Loss of edible portion is minimal and the exposed surface is smooth and attractive.

The thermal blast process has proven to be effective in removing the covering from a wide variety of food products including fruits, vegetables, nuts, fish and shellfish. By varying the temperature and/or time of heating, excellent results have been obtained in removing coverings ranging from the very think peel of a ripe peach to the relatively thick peel of an orange.

However, the process has the problem of requiring a substantial amount of time and energy to carry it out.

According to the present invention there is provided a method of peeling thin skinned food products with minimal loss of or damage to edible portions thereof, said method comprising the steps of feeding said food product continuously into and out of a vessel, subjecting said food products as they pass through said vessel, to radiant heat at a temperature in the range of 340°C to 705°C and to contact heat from the fluid in the vessel at a temperature in the range of 340°C to 705°C, maintaining the pressure in said vessel at a level not greater than two bars gauge and arranging for the food product to spend between 8 and 75 seconds in said vessel and immediately thereafter subjecting said food products to ambient temperature and pressure.

The thermal shock process as disclosed herein is distinctively different from any of the current commercial processes. It is related to conventional pressurised steam peeling in that steam is utilised in both processes. The manner in which the steam is utilised and the end results are vastly different.

While the method of the present invention has certain common features with the "thermal blast" process there are a number of important differences. Their common feature is that they both utilise radiant heat from the walls of a vessel and contact heat from a fluid or gaseous medium simultaneously for rapid surface heating of the product. A major difference is that the present "thermal shock" method is continuous and utilises relatively low pressures compared with those of the "thermal blast" process, and generally higher temperatures for the superheated steam or other fluid or gaseous medium. The use of lower pressures in the present invention limits somewhat the range of products on which the invention is effective, but has the advantage of allowing efficient and continuous peeling to proceed, rather than having to accomplish the peeling in discrete individual batches. Differences between the present invention and the "thermal blast" patents are set out in Table I below.

## TABLE I

### COMPARISON OF THERMAL BLAST AND THERMAL SHOCK PROCESSES

| Items of Comparison | Thermal Blast Process | Thermal Shock Process |
|---|---|---|
| Product Adaption | Effective in blasting the peel, pod, shuck, skins, scale or shell from many vegetable and animal products. | Effective only in peeling certain products with relatively thin skins that separate easily from the edible portion, by thermal shock treatment at low pressure. |
| Properties of Super-heated steam | 2 to 6.8 bar pressures and 204 to 427°C temperatures. | Pressure not greater than 2 bar, preferably 0 to 0.68 bar pressures; 348 to 704°C temperatures, preferably 427 to 538°C. |

## TABLE I (cont'd)

| Items of Comparison | Thermal Blast Process | Thermal Shock Process |
|---|---|---|
| Flow of Product | Batch process with loading and discharge from same end of vessel. This requires tilting of vessel upward for loading and downward for discharge. Process time is lost between batches. | Product flows continuously through vessel, entering and and leaving through seal means. Vessel can remain in a fixed position. Continuous flow results in higher production rate. |
| Thermal Treatment | Rapid heating of product surface followed by blast discharge. | Rapid thermal shock treatment at low pressure, followed by scrub-wash, if needed. |
| Steam Use | Steam lost by exhaust to atmosphere from each batch. | Steam can be recycled and supplemented with make-up steam generated in heat exhangers. |
| Product Discharge | Special system required for catching product during blast discharge. | Product discharged gently to conventional conveyor. |
| Process Noise | Muffling of blast noise is required. | No unusual process noise involved. |
| Controls and Automation | Multiple step process increases control and automation requirements. | Continuous flow process minimises control and auto-mation requirements. |

The thermal shock method utilises a combination of radiant heat coupled with superheated steam or other fluid or gaseous medium ranging in temperature into which conditions relatively thin-skinned fruits, vegetables or other food products, such as tomatoes, potatoes, peaches, carrots, apples, plums, and kiwis are introduced. The sudden exposure to intense heat weakens the bonds between the peel and the subsurface matter, without significant injury to the latter. Because the pressure of the superheated steam or other fluid or gaseous medium is relatively low, the pressure beneath the peel resulting from heated moisture immediately below the surface of the peel cannot reach an equillibrium level sufficient to "blast" the peel off upon rapid depressurisation as in the thermal blast process. However, the pressure under the peel does aid in further weakening or destroying of the bonds holding the peeling to the subsurface matter, although less dramatically and, in the case of relatively thicker skinned food products, somewhat less thoroughly than in the case of the thermal blast inventions. However, for relatively thin skinned food products, the thermal shock method of the present invention achieves excellent results in accomplishing the desired peeling. Depending upon the thickness of the peel and the degree of ripeness of the fruits or vegetables being processed, some follow-up washing or scrub-washing may be desirable to remove completely all of the loosened peel to the extent not already removed by the thermal shock method. However, such washing or scrub-washing is minimal in comparison with other known peeling methods, except the thermal blast method. and generally leaves the subsurface matter of the food products without significant damage. Table 11 below shows the results obtain for given lengths of thermal shock processing time for a variety of food products suitable for the method of the present invention:

## TABLE II

## PROCESS TESTS ON THERMAL SHOCK PEELING
## OF FRUIT AND VEGETABLE PRODUCTS

| Product | Thermal Shock Treatment (Seconds Process Time) | Evaluation of Results |
|---|---|---|
| Tomato | 15 | Excellent peel, scrub-wash required. |
| Peach | 20 | Excellent peel, needs water wash only. |
| Carrot | 20 | Excellent peel separation, water wash only. |
| Apple | 30 | Peel loosened, removed by scrub-wash. |
| Apple | 60 | Complete peel with scrub-wash, some caramelisation. |
| Potato | 60 | Complete peel with wash. |
| Plum | 15 | Excellent results, requiring water wash only. |
| Kiwi | 60 | Peel washed off, some heating of flesh causing outer layers to break off in places. |

The thermal shock treatment above was carried out at a vessel temperature of approximately 482°C, fluid heating medium (superheated steam) at approximately 0.1 bar and 344 to 372°C temperature.

In order that the present invention may more readily be understood, the following description is given, merely by way of example reference being made to the accompanying drawing, in which:

Figure 1 is a very schematic view showing one way of carrying out the thermal shock method according to the invention; and

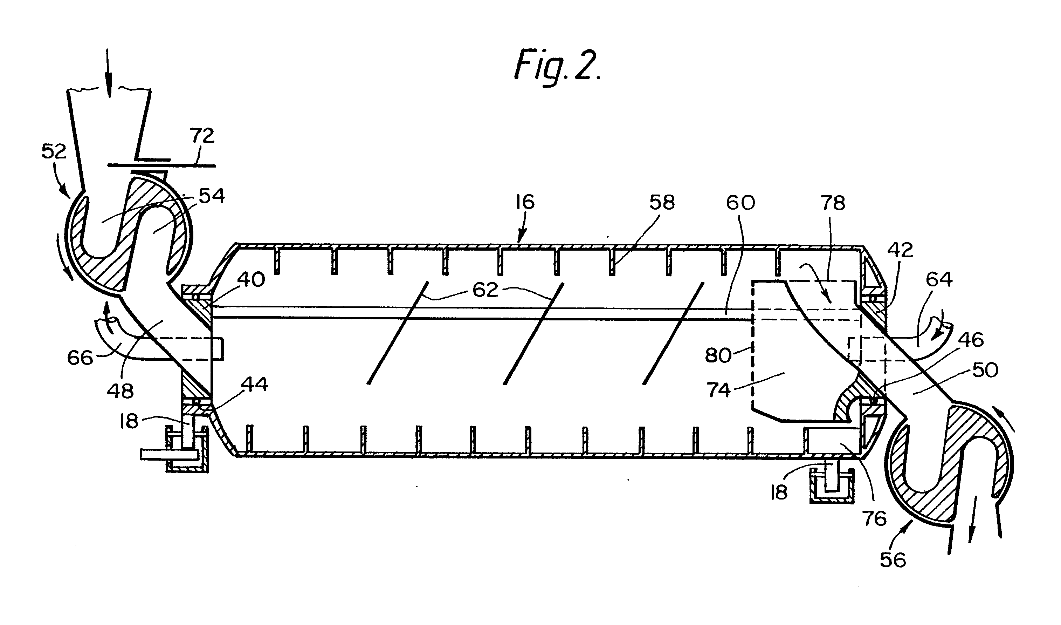

Figure 2 is an enlarged view showing the vessel of Figure 1 with certain of its associated parts.

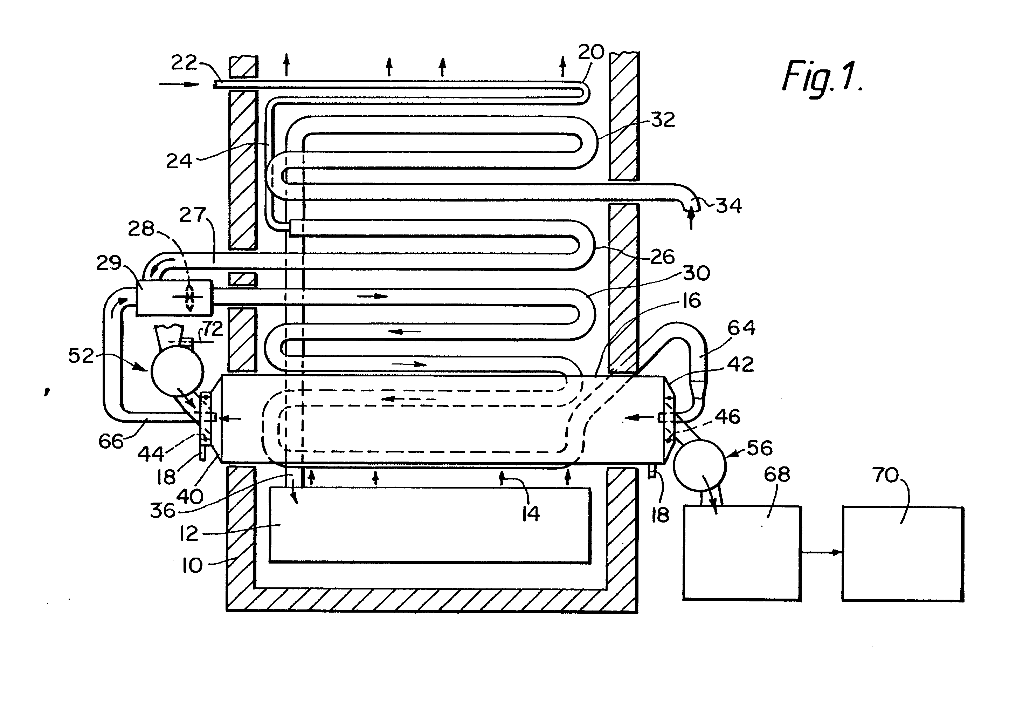

Referring first to Figure 1 there is illustrated an insulating combustion chamber 10 having in its lower part a burner 12 from which hot combustion gases 14 flow. Mounted for rotation above the burner 12 is a cylindrical vessel 16 which is rotatable about a horizontal axis on support rolls 18. Further details of the vessel will be described below.

Adjacent the upper end of the combustion chamber 10 is mounted a first heat exchanger 20, which is fed ambient temperature water via an inlet 22. An outlet 24 for this heat exchanger 20 is connected to the second heat exchanger 26 which in turn is connected via an outlet 27 and a fan 28 located in a fan housing 29 to a further heat exchanger 30. Finally a fourth heat exchanger 32 receives ambient air from an inlet 34 and this is fed via an outlet 36 to provide preheated combustion air to the burner 12.

It will be seen that the cylindrical vessel 16 has associated therewith two fixed, stationary heads 40 and 42 and annular vessel seals 44, 46 allow the vessel to rotate while maintaining a super-atmospheric pressure within the vessel.

Connected to the stationary head 40 is a product inlet 48 and to the stationary head 42 a product outlet 50. An inlet valve 52 in the form of a rotary cylindrical valve in which discrete compartments 54 are provided in inlet 48 and a similar valve 56 is included in the outlet 50.

Extending along the inner surface of the wall of the cylinder 16 is a helical conveyor auger 58 and a support rod 60 is fixed to the two stationary heads 40, 42 and carries a plurality of inclined baffles 62 at axially spaced locations therealong. A superheated steam inlet 64 is provided in the fixed head 42 and a superheated steam outlet 66 in the fixed head 40, these being connected to the outlet of the third heat exchanger 30 and to the inlet side of the fan housing 29, respectively (see Figure 1). The outlet valve 56 is positioned to feed products via a wash and scrub washer 68 and then to a conveyor 70 for the next processing or packaging operation.

Upstream of the inlet valve 52 is an inlet gate 72 which can be opened and closed to allow food products to pass to the valve 52. Mounted coaxially adjacent the fixed head 42 is a cylindrical member 74 and between the last flight of the auger 58 and the fixed head 42 is a product elevator baffle 76. The upper end 78 of the outlet 50 is formed as a hopper or chute, so that when the baffle 76 reaches the top, food products picked up by the baffle 76, readily drop down and out through the outlet 50. To prevent the product entering the cylindrical member 74 a grill 80 is provided at the inner end, this preventing the product entering, but allowing the superheated steam to flow from the conduit 64 into the interior of the cylindrical vessel 16.

In operation a suitable fuel is fed to the burner 12 and ignited and the hot products of combustion flow upwardly in the furnace combustion chamber 10 heating first the cylindrical vessel 16 and then the heat exchangers 30, 26, 32 and 20. The heat exchanger 32 improves the efficiency of the combustion, because the combustion air arrives at the burner at an elevated temperature.

Ambient temperature water is fed in at 22 and is preheated in heat exchanger 20 before it is fed to the second heat exchanger 26 in which low pressure dry make-up steam is produced. This is fed via the fan 28 to the heat exchanger 30 in which superheated steam is created and this is fed via conduit 64 to the vessel 16 in which it flows from right to left, in Figure 1, and exits via conduit 66 for recycling by the fan 68.

A food product is fed from a supply (not shown) to the inlet valve 52 which is cyclicly rotated so that the product is deposited in the vessel 16 and is fed therethrough by the auger 58 which rotates with the vessel, the baffle 60 assisting the movement of the product which then leaves via the outlet valve 56. The inlet and outlet valves 52, 56 maintain an adequate pressure within the vessel while allowing the product to be fed continuously into and out of the vessel. The product then leaves via the washer 68 and the conveyor 70.

The walls of the vessel are maintained at temperature levels of 340°C to 705°C and the superheated steam is maintained also at temperature levels of 340°C to 705°C, with preferable temperature ranges for the vessel walls and the superheated steam being in the range 427°C to 538°C Pressures of the superheated steam can range up to 2 bar but are preferably in the range of 0 to 0.68 bar. The combination of radiant heat from the walls of the vessel 1 and the contact heat from the superheated steam and the pressure from the superheated steam synergisticially destroy or substantially weaken the bond between the peel and the underlying food substance of relatively thin peeled products, i.e. generally less than 0.8 mm in thickness. This is achieved in a matter of seconds, quickly enough to prevent damage to the food product. The results of typical tests are shown in Table II above. The relative low pressure utilised in the present invention make the continuous processing possible which would not be suitable under very high pressure conditions. It is found that low pressures can be maintained without sacrificing the desirable feature of continuity in an assembly line type processing operation, such as in a commercial food processing plant. In general, with relatively thin skinned fruit and vegetables, excellent results are obtained. The degree of ripeness of the fruit or vegetables being processed can affect the utility of the invention if the peel has a thickness near the upper limit mentioned. In general, the peel of riper fruit or vegetables is less firmly bonded to the underlying fruit or vegetable matter beneath the peel and can thus be removed more readily than the peel of less ripe fruit and vegetables. Hence, in the case of ripe fruit and vegetables, thicker peel can in practice be removed than is the case with less ripe products.

The recycling of the superheated steam exhausted from the vessel 16 back into the heat exchanger 30 is not an essential part of the invention, but improves the energy efficiency. Similarly the air preheated 32 is not an essential part of the invention but again improves the thermal efficiency. Further efficiencies are achieved by the baffles 62 which direct the superheated steam within the vessel more precisely onto the product as it is processed within the vessel. The insulated furnace housing 10 again is not essential but improves the thermal efficiency.

. The inlet and outlet valves 52, 56 form a seal for the rotating vessel 16 but these could be replaced by other known types of valve, such as rotating seals, screwseals, water U-tube seals or any other convenient form.

While superheated steam is the preferred fluid because it is inexpensive, plentiful and non-toxic and holds its heat well, any other suitable fluid may be used.

The washing or scrub-washing in the washer 68 is not an essential part of the invention but it can be useful in removing residues of peel and can be an efficient and effective way to improve the appearance of the fruit and vegetables prior to further processing or packaging.

The superheated steam is shown circulated in the vessel 16 countercurrent to the flow of the product. This is preferred because it maximises the temperature to which the product is exposed as it leaves the vessel and this assists in breaking the bond between the peel and the edible material. However, the invention will work, although less effectively, if the fluid flows in co-current with the food product.

**Claims**

1. A method of peeling thin skinned food products with minimal loss of or damage to edible portions thereof, said method comprising the steps of subjecting said food products to radiant heat at an elevated temperature and simultaneously subjecting said food products to contact heat from a fluid medium at an elevated temperature and pressure, maintaining an elevated pressure on said food products through said fluid medium for a predetermined time period and immediately thereafter subjecting said food products substantially to ambient temperature and pressure, characterised in that the food product is fed continuously into and out of a vessel, in that the food product is subjected, as it passes through said vessel, to radiant heat at a temperature in the range of 340°C to 705°C and to contact heat from the fluid in the vessel at a temperature in the range of 340°C to 705°C, in that the pressure in said vessel is maintained at a level not greater than two bars gauge and in that the food product spends between 8 and 75 seconds in said vessel.

2. A vessel according to claim 1, characterised in that said vessel is generally cylindrical.

3. A method according to claim 1 or 2, characterised in that said vessel is rotated about a substantially horizontal axis.

4. A method according to any preceding claim, characterised in that the vessel is heated by applying combustion gases to the exterior thereof.

5. A method according to claim 4, characterised in that the combustion gases rise upwardly through a combustion chamber and are used to preheat said fluid which is passed through at least one heat exchanger disposed in said combustion chamber.

6. A method according to any preceding claim, characterised in that said fluid is superheated steam.

7. A method according to any preceding claim, characterised in that said fluid is deflected downwardly by passing over a plurality of baffles in said vessel.

8. A method according to any preceding claim, characterised in that said food products are passed through pressure seals as they enter and leave said chamber.

9. A method according to any preceding claim, characterised in that said food products are urged through said vessel by means of an auger associated with said vessel.

Fig.1.

0 283 607

Fig.2.

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 524 681 (H. HARRIS et al.) <br> * Column 11, line 30 - column 12, line 6 * | 1,4-6 | A 23 N 7/00 |
| A | FR-A-2 164 844 (ING. ROSSI & CATELLI S.N.C.) <br> * Page 3, line 22 - page 4, line 13; figures 1-2 * | 2-3,8-9 | |
| A | US-A-2 534 648 (P.C. WILBUR) | | |
| D,A | US-A-3 759 166 (G.G. TRANDIN et al.) | | |
| D,A | US-A-4 569 850 (H. HARRIS et al.) | | TECHNICAL FIELDS SEARCHED (Int. Cl.4) |
| D,A | FR-A-2 330 336 (P. KUNZ) | | A 23 N <br> A 23 P |

The present search report has been drawn up for all claims

| Place of search | Date of completion of the search | Examiner |
|---|---|---|
| THE HAGUE | 13-10-1987 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82